# EUROPEAN PATENT SPECIFICATION

(11) **EP 0 372 849 B1**
(45) Date of publication and mention of the grant of the patent: **27.07.1994**
(21) Application number: 89312552.6
(22) Date of filing: 01.12.1989
(51) Int. Cl.: B60R 22/44

(54) **A control device for an inertia reel seat belt**
Kontrollvorrichtung für einen Sicherheitsgurt mit Trägheitsaufroller
Dispositif de contrôle pour ceinture de sécurité à enrouleur inertiel

(30) Priority: 07.12.1988 GB 8828548
(43) Date of publication of application: 13.06.1990
(73) Proprietor: PZ PRODUCTS LIMITED, Banbury Oxfordshire OX16 9DA (GB)
(72) Inventor: Oxley, Andrew Nicholas, Banbury Oxfordshire (GB)
(74) Representative: Adkins, Michael

(56) References cited:
- EP-A- 0 148 757
- BE-A- 881 088
- DE-A- 2 839 708

## Description

The invention relates to a control device for an inertia reel seat belt.

Inertia reel seat belts are now used to a very large extent in motor vehicles. Such seat belts are useful in that any unnecessary slack in the seat belt is taken up by the inertia reel and adjustment of the seat belt length by means of buckles is unnecessary. However it has been found that the continuous tension applied to the seat belt by the inertia reel can cause annoyance to the user.

In GB-A-2005130 there is described a simple and very effective device for enabling a small amount of slack to be introduced in the belt. The device prevents rewinding of the seat belt by the inertia reel once slack has been introduced and thereby prevents the seat belt from applying pressure which would cause discomfort to the user.

Another device is described in EP-A-148757 in which a control device for an inertia reel seat belt comprises a member across which the seat belt passes when in use, a movable element mounted on said member for movement between first and second positions in which the seat belt is respectively gripped to inhibit rewinding and released to permit rewinding, and attachment means on the member for hooking on to a seat belt guide and over which the seat belt passes. As vehicle manufacturers now install seat belt guides of widely varying dimensions it has been found that such a hook-like attachment will not always locate positively on the guide and can become dislodged. The pre-characterising portion of claim 1 is based on this document.

One object of the present invention is to provide an improved control device for an inertia reel seat belt.

According to the present invention there is provided a control device for an inertia reel seat belt comprising a member which includes a seat belt retaining element for inhibiting rewinding of the seat belt and attachment means for attaching the member to a seat belt guide or other mounting, characterised in that the attachment means includes a section which includes or carries a strip of flexible material which is arranged to pass round the same part of the guide or other mounting over which the seat belt passes so that the said section of the attachment means and the flexible strip form a loop, the said strip being of substantially similar width to that of a seat belt.

Another object of the present invention is to provide an improvement in the devices shown in GB-A-2005130 and EP-A-148157 which will enable the device to fit a wider range of seat belt guides or like mountings.

Preferably a seat belt passes across the member when in use, and the element is mounted on said member for movement between first and second positions in which the seat belt is respectively gripped to inhibit rewinding and released to permit rewinding.

By forming a loop, the device cannot be dislodged from the seat belt guide or like mounting and, therefore, location is very positive.

Preferably, the flexible strip of material can be arranged so as to enable loops of various sizes to be formed. In that way, it is possible to accommodate a wide range of seat belt guide sizes.

The flexible strip may be elongate and may be connected to the section by suitable attachments towards its ends. One or each attachment may take the form of a stud and aperture attachment, the stud preferably being on the section and the aperture being formed in the flexible strip. A plurality of apertures may be arranged along the flexible strip, e.g., towards one end of the strip to enable a selected aperture or apertures to locate on one or more studs. In that way, selection of appropriate studs will enable the size of the loop to be varied.

The section may take the form of a clip. Preferably the clip comprises a body and a holding part. In such a case a portion of the flexible strip may be positioned adjacent the body and the holding part fitted, e.g., snap fitted, on to the body to hold said portion of the flexible strip in place. The portion of the strip may be one end thereof. The body may be provided with one or more studs for location in an aperture or aperture in the flexible strip. Where the holding part snap fits on to the body, it may snap-fit on to the stud or studs. The holding part may be hingedly connected to the body. A second holding part may be provided for holding in place another portion of the strip spaced from the first said portion. The body may be provided with one or more further studs for location in one or more further apertures in the flexible strip. The second holding part may snap fit on to the body, e.g., on an opposite side of the body to the first holding part. In the latter case, the second holding part may snap fit on to the stud or studs. Preferably the second holding part is hingedly connected to the body.

The attachment means may include a second section which is pivotally mounted on the member to enable the member to swivel relative to the attachment means. The second section may comprise a rod which may be connected by screw means to the member to enable the distance between the first section of the attachment means and the member to be varied. Preferably the first and second sections of the attachment means are pivotally interconnected to permit, e.g., pivoting of the first section about an axis transverse to the axis of swivelling of the member about the second section of the attachment means.

Where the first section of the attachment means includes said body, the body may be pivotally connected to the second section by a stud and aperture connection. In such a case the stud may be on the body and the aperture defined by the second section. Where the second section is a rod, the aperture may be defined by bending one end of the rod to form an eye. The stud can then pass through the aperture or eye and may be retained therein by arranging for one of the aforesaid holding parts to lie closely adjacent a free end of the stud when the holding member holds the flexible strip in position on the body. The flexible strip will normally lie between the end of the stud and the adjacent holding part.

The member may include guide means spaced from a surface of the member whereby, in use, the seat belt passes between the guide means and that surface of the member. The guide means may include one or more guide members such as inwardly directed fingers or the like. The guide means may extend from outwardly directed flanges on the member. The flanges may include end walls for forming a channel through which the seat belt passes, in use. The end walls may carry the aforesaid guide member or members. Preferably, the guide means is arranged on a front surface of the member and the aforesaid movable element is also arranged on the front surface of the member.

As in EP-A-148757, the aforesaid rod may include a screw threaded portion located in a channel formed in the member. The channel may house a co-operating nut, e.g., in a recess in the channel.

The member is preferably T-shaped with the attachment means associated with the vertical limb of the T and the movable element associated with the transverse limb of the T.

The control device, in use causes the seat belt to be gripped between said movable element and a portion of the member. The said portion may comprise a plurality of spaced apart ribs which extend, e.g., in the direction of seat belt movement. The ribs provide an enhanced gripping effect when the seat belt is gripped to inhibit rewinding. The ribs may be arranged within a tray-like section of the member so as to lie between wall portions of the tray-like section over which the seat belt passes. Preferably the ribs have upper surfaces which lie in a plane below upper edges of said wall portions. A control device in accordance with the invention will now be described by way of example with reference to the accompanying drawings in which:-
Fig.1 is a diagrammatic exploded perspective view of one form of control device in accordance with the invention,
Figs.2, 3 and 4 are cross-sections of parts of the control device of Fig.1 on the lines II-II, III-III and IV-IV in Fig.1 respectively,
Fig.4A is an enlarged cross-sectional view of part of the control device viewed in Fig.4 with a seat belt in place,
Fig.5 is a cross-section of the assembled control device on the line V-V in Fig.1,
Fig.6 is a diagrammatic front perspective view of an alternative version of the control device shown in Figs.1 to 5 shown partly assembled on a seat belt and seat belt guide, and
Fig.7 is a cross-section through part of the attachment means drawn to a larger scale.

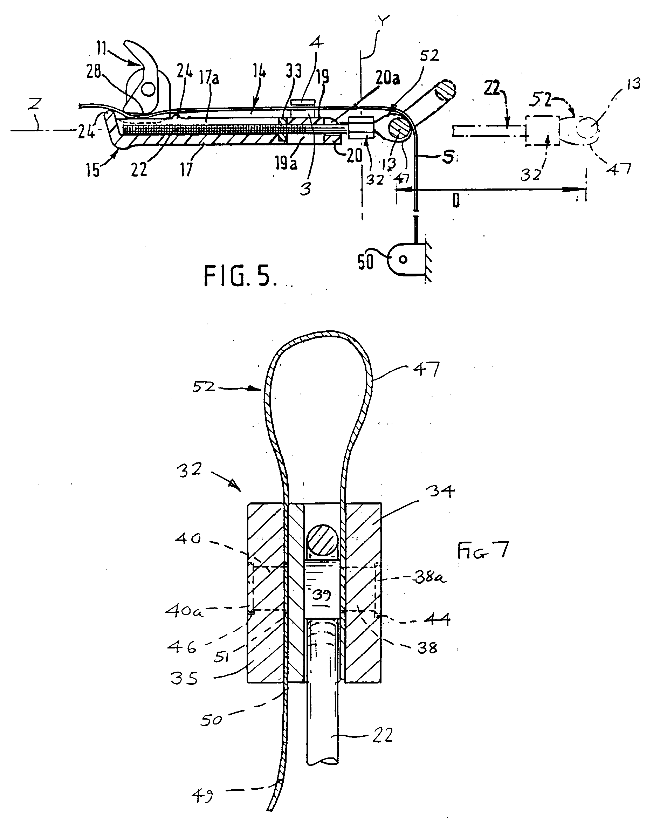

The control device comprises a T-shaped member 10, a movable element 11 and adjustable attachment means 12 by which the device can be connected to a mounting such as a seat belt guide 13 (Fig.5) in a vehicle.

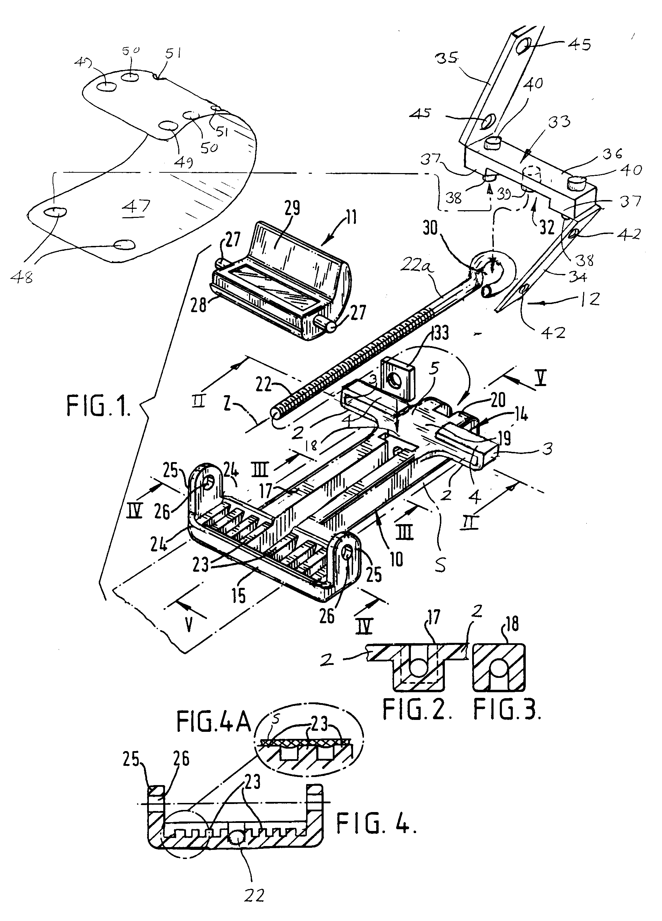

The member 10 comprises a longitudinal limb 14 and a transverse limb 15. The limb 14 is U-shaped in cross-section (see Fig.2) over a section 17 between the transverse limb 15 and a transverse recess 18, is of inverted U-shaped cross-section (see Fig.3) over an intermediate section 19 and is U-shaped in cross-section over an end section 20 between the intermediate section 19 and the right-hand end of the limb 14 as viewed in Figs.1 and 5. The sections 17, 19 and 20 define respective channels 17a, 19a and 20a which receive a screw threaded rod 22 of the attachment means with working clearance. The channel 17a extends into the tray-like limb 15 between an inner pair of a plurality of parallel ribs 23 which extend transversely of the limb 15 between elongate projections 24 which form opposing walls of the tray.

The upper edges of the ribs 15 lie in a plane below the projections 24 so that the seat belt is deflected against the ribs 15 as shown in Fig.5 when gripped by the element 11. The outer ends of the limb 15 are provided with two upstanding lugs 25 formed with coaxial bores 26. The bores 26 locate pegs 27 formed at opposite ends of the movable element 11. The element 11 is formed with a seat belt engaging ledge 28 and a handle 29 and its operation is described below. The rod 22 has an unthreaded portion 22a which is bent to form an eye 30 to enable it to be connected to a clip 32 as described below. Preferably, the end of the screw threaded section of the rod cannot be screwed against the facing portion of the limb 15. That feature avoids the risk of fracturing limb 15. The recess 18 houses a square nut 133 and the rod 22 screws through the nut as shown in Fig.5.

Two flanges 2 extend outwardly from section 17 and terminate at upstanding walls 3 forming a channel through which the seat belt S can pass. Two fingers 4 extend inwardly from the walls 3 and define a gap 5 therebetween.

The clip 32 comprises a body 33 and first and second holding parts 34, 35. The clip is preferably formed as a plastics moulding and the holding parts are hinged to the body. The body 33 comprises a plate 36 having thickened end sections 37 on one face each of which is integral with stud 38. The plate 36 carries a central pin or stud 39 which locates in the eye 30. The opposite face of the plate is integral with two studs 40 coaxial with the studs 38. The outer ends of the studs 38, 40 are formed with slight enlargements 38a, 40a (Fig.7). The holding part 34 is hinged to one of the enlargements 37 and is formed with two apertures 42 for receiving the studs 38. The apertures are formed with counterbores 44. The holding member 35 is hinged at the opposite end of the body 33 and is formed with two apertures 45 for receiving the studs 40. The apertures 45 are formed with counterbores 46.

A flexible strip of fabric-reinforced plastics material 47 is formed at one end with two apertures 48 for receiving the studs 38. Towards its opposite end the strip is formed with three sets of apertures 49, 50, 51, any one of the sets being capable of receiving the studs 40.

The assembled device is shown in Fig.5 and the assembly of the flexible strip 47 and clip 32 is shown in Fig 7. To assemble the clip and flexible strip, the stud 39 is first located in the eye 30 and the apertures 48 of the strip located on the studs 38. The holding part 34 is then closed so that the studs 38 pass through the apertures 42 and the enlargements 38a snap into the counterbores 44 to retain the holding member 35 in its closed position as in Fig 7. The clip 32 is then held captive on the rod 22 by the holding part 34. The free end of the flexible strip 47 is then passed around the lower section of seat belt guide 13 beneath the seat belt and one of the sets of apertures 49, 50, 51 is located on the studs 40. The holding part 35 is then snapped shut in the same way as holding member 34 to retain the flexible strip in the clip. The enlargements 40a on the studs 40 snap into the counterbore 44. The flexible strip 47 and the clip 32 then jointly form a loop 52 which retains the control device on the guide 13. Once the flexible strip 47 has been located in the clip, the seat belt S is slipped through the gap 5 and beneath the two guide fingers 4. The element 11 is removed from the lugs 25 to enable the seat belt S to lie across the ribs 23 and the element 11 is then replaced.

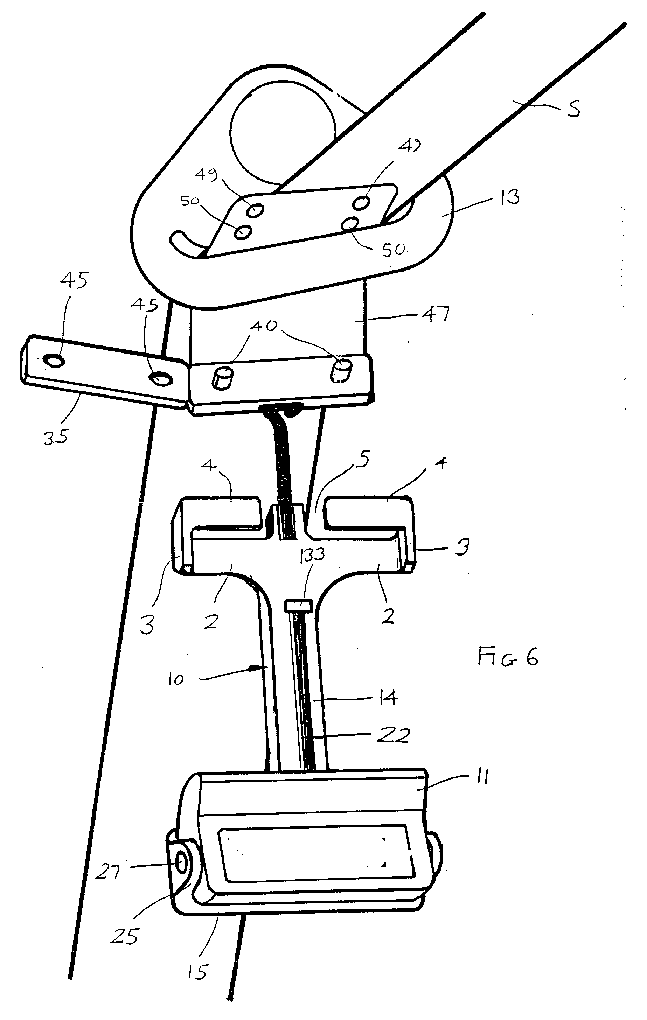

Fig.6 shows a slightly modified form of device with the longitudinal limb 14 of the T-shaped member 10 made more slender. The construction of the device is then substantially the same as that described with reference to Figs.1 - 7 and corresponding parts carry like reference numerals. Fig.10 shows the flexible strip 47 partly assembled around the seat belt guide 13 before final location beneath the holding member 35 of the clip 33.

In use, and with the flexible strip 47 of either device located around the guide 13, the member 14 can be unscrewed sufficiently so as to take up a position within easy reach of the user. In the embodiments illustrated an adjustment D of up to e.g. 70mm is possible although, of course, the device could be designed to provide greater adjustment. The seat belt S then passes from the inertia reel indicated at 50, over the flexible strip 47, beneath fingers 4, over the projections 24 and beneath element 11. By turning the element 11 anti-clockwise (as viewed in Fig.5) from the Fig.6 about an axis defined by pegs 27, the ledge 28 will urge the seat belt against the ribs 23. The ribs 23 tend to indent the seat belt slightly as apparent from Fig.4A which improves the grip between the seat belt and the ribs and allows thin or thick seat belts to be clamped securely. Once the element 11 has been positioned in that way the inertia reel is unable to re-wind the seat belt. The seat belt can, however, be released by pulling it in the withdrawal direction as described in GB-A-2005130 and EP-A-148757 to turn the element 11 clockwise and space the ledge 28 well clear of the ribs 23. On pulling the seat belt S in the withdrawal direction, the deflected section between projections 24 tends to straighten and creates an additional force which assists rotation of the element 11. The belt can then be re-wound by the inertia reel.

As well as providing adjustment of the member 10 towards or away from the guide 13, the screw threaded rod 22 also allows the member 10 to turn about the axis Z of the rod relative to the guide. Moreover the stud permits pivoting of the member 10 about an axis Y (Fig.5) transverse to the axis Z of the rod 22. The clip 33 can swing on the guide 13 clockwise or anticlockwise as viewed in Figs.5 and 9. The control device is therefore substantially universally movable relative to the guide 13 and will permit the seat belt S to follow a substantially straight line (except for the portion clamped by the element 11) between the guide 13 and the shoulder of the user. This is particularly desirable as the belt itself is not constrained by the control device towards a position which could cause discomfort to the user. In particular the fact that the member 10 can rotate about the axis Z is very useful in that it ensures that member 10 can follow the seat belt S as shown in Fig.11 of EP-A-148757 when the seat belt twists relative to the guide so as to lie flat against the body of the user. Moreover, the sets of apertures 49, 50, 51 enable the flexible strip 47 to form a loop of varying size to enable the loop to accommodate seat belt guides of different thickness.

If desired the clip 33 may be formed integrally with the member 10 instead of being connected to the member 10 through the screwed rod 22.

## Claims

1. A control device for an inertia reel seat belt comprising a member (10) which includes a seat belt retaining element (11) for inhibiting rewinding of the seat belt and attachment means (32) for attaching the member (10) to a seat belt guide or other mounting (13), characterised in that the attachment means (32) includes a section which includes or carries a strip (47) of flexible material which is arranged to pass round the same part of the guide or other mounting (13) over which the seat belt passes so that the said section of the attachment means (32) and the flexible strip (47) form a loop, the said strip (47) being of substantially similar width to that of a seat belt.

2. A control device as claimed in claim 1, characterised in that a seat belt passes across the member (10) when in use, and the element (11) is mounted on said member (10) for movement between first and second positions in which the seat belt is respectively gripped to inhibit rewinding and released to permit rewinding.

3. A control device as claimed in claim 1 or claim 2, characterized in that the flexible strip (47) of material can be arranged so as to enable loops of various sizes to be formed.

4. A control device as claimed in claim 1, 2 or 3, characterised in that that flexible strip (47) is connected to the section by suitable attachments (32), one or each attachment taking the form of a stud (38) and aperture (42) attachment.

5. A control device as claimed in claim 4, characterised in that the stud (38) is on the section and the aperture (42) is formed in the flexible strip (47).

6. A control device as claimed in claim 4 or claim 5 when dependent on claim 3, characterised in that a plurality of apertures (49, 50, 51) is arranged along the flexible strip to enable a selected aperture or apertures to locate on one or more studs (38, 40) to enable the size of the formed loop to be varied.

7. A control device as claimed in any preceding claim, characterised in that the section comprises a body (33) and a holding part (34).

8. A control device as claimed in claim 7, characterised in that the holding part (34) snap fits onto the body (33).

9. A control device as claimed in claim 7 or 8, characterised in that the body (33) is provided with one or more studs (38) for location in an aperture or apertures (48) in the flexible strip (47).

10. A control device as claimed in claim 9, characterised in that where the holding part (34) snap fits on to the body (33), it snap-fits on to the stud or studs (38).

11. A control device as claimed in any of claims 7 to 10, characterised in that the holding part (34) is hingedly connected to the body (33).

12. A control device as claimed in any of claims 7 to 11, characterised in that a second holding part (35) is provided for holding in place a portion of the strip spaced from the portion which is arranged to be held by the first holding part (34).

13. A control device as claimed in Claim 12, characterised in that the body (33) is provided with one or more further studs (40) for location in one or more further apertures (49, 50, 51) in the flexible strip (47).

14. A control device as claimed in claim 12 or 13, characterised in that the second holding part (35) snap fits on to the body (33).

15. A control device as claimed in claim 14, characterised in that the second holding part (35) snap fits onto an opposite side of the body (33) to the first holding part (34).

16. A control device as claimed in claim 15 when dependent on claim 13, characterised in that the second holding part (35) snap fits on to the stud or studs (40).

17. A control device as claimed in any of claims 12 to 16, characterised in that the second holding part (35) is hingedly connected to the body (33).

## Patentansprüche

1. Eine Kontrollvorrichtung für einen Sicherheitsgurt mit Trägheitsaufroller mit einem Element (10), das ein Sicherheitsgurtzurückhaltelement (11) aufweist, um das Aufwickeln des Sicherheitsgurtes zu verhindern und eine Befestigungseinrichtung (32) zur Befestigung des Elements (10) an einer Sicherheitsgurtführung oder einer anderen Lagerung (13), **dadurch gekennzeichnet**, daß die Befestigungseinrichtung (32) einen Abschnitt aufweist, der einen Streifen (47) aus flexiblen Material umfaßt oder trägt, der so angeordnet ist, daß er um dasselbe Teil der Führung oder einer anderen Lagerung (13) läuft, über das der Sicherheitsgurt läuft, so daS der Abschnitt der Befestigungseinrichtung (32) und der flexible Streifen (47) eine Schleife bilden, wobei der Streifen (47) im wesentlichen dieselbe Breite wie der Sicherheitsgurt aufweist.

2. Eine Kontrollvorrichtung nach Anspruch 1, **dadurch gekennzeichnet**, daß der Sicherheitsgurt bei Benutzung über das Element (10) läuft und das Element (11) an dem Element (10) zur Bewegung zwischen einer ersten und einer zweiten Position befestigt ist, in der der Sicherheitsgurt festgehalten wird, um ein Aufwickeln zu verhindern oder freigegeben wird, um ein Aufwickeln zu ermöglichen.

3. Eine Kontrollvorrichtung nach Anspruch 1 oder 2, **dadurch gekennzeichnet**, daß der flexible Streifen (47) aus einen Material so angeordnet ist, daß dieser die Ausbildung Schleifen verschiedener Größen ermöglicht.

4. Eine Kontrollvorrichtung nach Anspruch 1, 2 oder 3, **dadurch gekennzeichnet**, daß der flexible Streifen mit dem Abschnitt mittels geeigneter Befestigungen (32) verbunden ist, wobei eine oder jede Befestigung in Form einer Stehbolzen- (38) und Öffnungsbefestigung (42) ausgebildet ist.

5. Eine Kontrollvorrichtung nach Anspruch 4, **dadurch gekennzeichnet**, daß der Stehbolzen (38) an dem Abschnitt und die Öffnung (42) an dem flexiblen Streifen (47) ausgebildet ist.

6. Eine Kontrollvorrichtung nach Anspruch 4 oder 5, wenn rückbezogen auf Anspruch 3, **dadurch gekennzeichnet**, daß eine Vielzahl von Öffnungen (49, 50, 51) entlang des flexiblen Streifens angeordnet sind, um eine Anordnung einer ausgewählten Öffnung oder ausgewählter Öffnungen auf einem oder mehreren Stehbolzen (38, 40) zu ermöglichen, um eine Änderung der Größe der ausgebildeten Schleife zu ermöglichen.

7. Eine Kontrollvorrichtung nach einem der vorangehenden Ansprüche, **dadurch gekennzeichnet**, daß der Abschnitt ein Hauptteil (33) und ein Halteteil (34) umfaßt.

8. Eine Kontrollvorrichtung nach Anspruch 7, **dadurch gekennzeichnet**, daß das Halteteil (34) an dem Hauptteil (33) einschnappbar ist.

9. Eine Kontrollvorrichtung nach Anspruch 7 oder 8, **dadurch gekennzeichnet**, daß das Hauptteil (33) mit einem oder mehreren Stehbolzen (38) zur Anordnung in einer oder mehreren Öffnungen (48) im flexiblen Streifen (47) versehen ist.

10. Eine Kontrollvorrichtung nach Anspruch 9, **dadurch gekennzeichnet**, daß das Halteteil (34) dort wo es an dem Hauptteil (33) einschnappt auf dem Stehbolzen oder den Stehbolzen (38) einschnappt.

11. Eine Kontrollvorrichtung nach einem der vorangehenden Ansprüche 7 bis 10, **dadurch gekennzeichnet**, daß das Halteteil (34) schanierartig mit dem Hauptteil (33) verbunden ist.

12. Eine Kontrollvorrichtung nach einem der vorangehenden Ansprüche 7 bis 11, **dadurch gekennzeichnet**, daß ein zweites Halteteil (35) zum Halten eines Abschnittes des Streifens an einem Ort vorgesehen ist, wobei der Abschnitt von dem Abschnitt beabstandet ist, der vorgesehen ist, um von dem ersten Halteteil (34) gehalten zu werden.

13. Eine Kontrollvorrichtung nach Anspruch 12, **dadurch gekennzeichnet**, daß das Hauptteil (33) mit einem oder mehreren weiteren Stehbolzen (40) zur Anordnung in einer oder mehreren weiteren Öffnungen (49, 50, 51) im flexiblen Streifen (47) versehen ist.

14. Eine Kontrollvorrichtung nach Anspruch 12 oder 13, **dadurch gekennzeichnet**, daß das zweite Halteteil (35) an dem Hauptteil (33) einschnappbar ist.

15. Eine Kontrollvorrichtung nach Anspruch 14, **dadurch gekennzeichnet**, daß das zweite Halteteil (35) an einer gegenüberliegenden Seite des Hauptteils (33) bezüglich des ersten Halteteils 34 einschnappbar ist.

16. Eine Kontrollvorrichtung nach Anspruch 15, wenn abhängig von Anspruch 13, **dadurch gekennzeichnet**, daß das zweite Halteteil (35) an einem Stehbolzen oder Stehbolzen (40) einschnappbar ist.

17. Eine Kontrollvorrichtung nach einem der vorangehenden Ansprüche 12 bis 16, **dadurch gekennzeichnet**, daß das zweite Halteteil (35) schanierartig mit dem Hauptteil (33) verbunden ist.

## Revendications

1. Dispositif de contrôle pour ceinture de sécurité à enrouleur inertiel, comprenant un organe (10) qui comporte un élément de maintien de ceinture de sécurité (11) servant à empêcher le rebobinage de la ceinture de sécurité et un moyen de fixation (32) servant à fixer l'organe (10) à un guide de ceinture de sécurité ou à un autre montage (13), caractérisé en ce que le moyen de fixation (32) comprend une section qui comporte ou supporte une bande (47) en matériau flexible, qui est agencée de manière à passer autour de la même partie du guide ou de l'autre montage (13) sur lequel passe la ceinture de sécurité, de manière que ladite section du moyen de fixation (32) et la bande flexible (47) forment une boucle, ladite bande (47) présentant une largeur sensiblement identique à celle d'une ceinture de sécurité.

2. Dispositif de contrôle selon la revendication 1, caractérisé en ce qu'une ceinture de sécurité passe sur l'organe (10) lorsqu'il est en service et l'élément (11) est monté sur ledit organe (10) afin de se déplacer entre des première et deuxième positions, dans lesquelles la ceinture de sécurité est respectivement saisie afin d'empêcher le rebobinage et libérée afin de permettre le rebobinage.

3. Dispositif de contrôle selon la revendication 1 ou 2, caractérisé en ce que la bande flexible (47) peut être agencée de manière à permettre la formation de boucles de tailles différentes.

4. Dispositif de contrôle selon la revendication 1, 2 ou 3, caractérisé en ce que la bande flexible (47) est reliée à la section au moyen de fixations (32) appropriées, une ou chaque fixation prenant la forme d'une fixation à goujon (38) et à ouverture (42).

5. Dispositif de contrôle selon la revendication 4, caractérisé en ce que le goujon (38) se situe sur la section et l'ouverture (42) est formée dans la bande flexible (47).

6. Dispositif de contrôle selon la revendication 4 ou 5, lorsqu'elles sont rattachées à la revendication 3, caractérisé en ce qu'une pluralité d'ouvertures (49, 50, 51) est ménagée le long de la bande flexible, afin de permettre à une ou plusieurs ouvertures sélectionnées d'être disposées sur un ou plusieurs goujons (38, 40), en vue de faire varier la taille de la boucle formée.

7. Dispositif de contrôle selon l'une quelconque des revendications précédentes, caractérisé en ce que la section comprend un corps (33) et une partie de maintien (34).

8. Dispositif de contrôle selon la revendication 7, caractérisé en ce que la partie de maintien (34) s'encliquette sur le corps (33).

9. Dispositif de contrôle selon la revendication 7 ou 8, caractérisé en ce que le corps (33) est pourvu d'un ou plusieurs goujons (38) destinés à être placés dans une ou plusieurs ouvertures (48) ménagées dans la bande flexible (47).

10. Dispositif de contrôle selon la revendication 9, caractérisé en ce que, lorsque la partie de maintien (34) s'encliquette sur le corps (33), elle s'encliquette sur le ou les goujons (38).

11. Dispositif de contrôle selon l'une quelconque des revendications 7 à 10, caractérisé en ce que la partie de maintien (34) est reliée de manière articulée au corps (33).

12. Dispositif de contrôle selon l'une quelconque des revendications 7 à 11, caractérisé en ce qu'une deuxième partie de maintien (35) est prévue de manière à maintenir en place une partie de la bande espacée de la partie qui est agencée de façon à être maintenue par la première partie de maintien (34).

13. Dispositif de contrôle selon la revendication 12, caractérisé en ce que le corps (33) est pourvu d'un ou plusieurs goujons (40) supplémentaires destinés à être placés dans une ou plusieurs ouvertures (49, 50, 51) supplémentaires ménagées dans la bande flexible (47).

14. Dispositif de contrôle selon la revendication 12 ou 13, caractérisé en ce que la deuxième partie de maintien (35) s'encliquette sur le corps (33).

15. Dispositif de contrôle selon la revendication 14, caractérisé en ce que la deuxième partie de maintien (35) s'encliquette sur un côté du corps (33), opposé à la première partie de maintien (34).

16. Dispositif de contrôle selon la revendication 15, lorsqu'elle est rattachée à la revendication 13, caractérisé en ce que la deuxième partie de maintien (35) s'encliquette sur le ou les goujons (40).

17. Dispositif de contrôle selon l'une quelconque des revendications 12 à 16, caractérisé en ce que la deuxième partie de maintien (35) est reliée de manière articulée au corps (33).
